# EUROPEAN PATENT APPLICATION

(11) **EP 4 477 411 A1**
(43) Date of publication of application: **18.12.2024**
(21) Application number: 23769729.7
(22) Date of filing: 14.03.2023
(51) Int. Cl.: B32B 17/10, G02B 27/01

(54) **HOLOGRAPHIC DISPLAY GLASS AND PROCESSING METHOD THEREFOR, AND VEHICLE**

(30) Priority: 15.03.2022 CN 202210251754
(71) Applicant: Fuyao Glass Industry Group Co., Ltd., Fuqing, Fujian 350300 (CN)
(72) Inventor: CHEN, Hongwei, Fuzhou, Fujian 350300 (CN); LIN, Shou, Fuzhou, Fujian 350300 (CN); SHUI, Fang, Fuzhou, Fujian 350300 (CN)
(74) Representative: Grassi, Stefano
(86) International application number: PCT/CN2023/081194
(87) International publication number: WO 2023/174227

(57) **Abstract**

Holographic display glass (10) and a processing method therefor, and a vehicle. The holographic display glass (10) comprises: first glass (11), second glass (12), and a holographic diaphragm (13). The holographic diaphragm (13), the first glass (11), and the second glass (12) are laminated, and the holographic diaphragm (13) is located between the first glass (11) and the second glass (12). A first adhesive layer (14) is arranged between the holographic membrane (13) and the first glass (11), and a second adhesive layer (15) is arranged between the holographic membrane (13) and the second glass (12); and the holographic membrane (13) has a thickness of t, the first adhesive layer (14) has a thickness of t1, and the second adhesive layer (15) has a thickness of t2. Moreover, t, t1, and t2 satisfy 1/10 ≤ t/(t1+t2) ≤ 4/5.

## Description

### CROSS-REFERENCE TO RELATED APPLICATIONS

The present application claims priority to Chinese patent application No. 2022102517549, entitled "HOLOGRAPHIC DISPLAY GLASS, PROCESSING METHOD THEREOF AND VEHICLE", filed on March 15, 2022, the disclosure of which is incorporated herein by reference in its entirety.

### TECHNICAL FIELD

The present application relates to the technical field of holographic display elements, and in particular, to a holographic display glass, a processing method thereof, and a vehicle.

### BACKGROUND

Head-up display (HUD) technology mainly improves driving safety by projecting various data information onto a holographic display element in front of the driver, so as to enable the driver to read the required information without lowering his/her head or turning his/her head. In the head-up display technology, an element for reflecting image information displayed by a picture generation unit (PGU) to an active area of driver's eye is referred to as a holographic display glass. A holographic film is provided in the holographic display glass. The holographic film is laminated between two layers of glass. The holographic film can reflect the image information, and remain transparent when no image information is displayed. In addition to head-up display technology, the holographic display glass can also be applied to other glass display in vehicles. An adhesive layer is also provided between the holographic film and the glass. The holographic display glass may not require the use of a wedge-shaped adhesive layer. The difference in thermal shrinkage between the adhesive layer and the holographic film is large. As a result, the holographic film is are prone to wrinkling during processing and manufacturing.

### SUMMARY

According to various embodiments of the present application, a holographic display glass, a processing method thereof, and a vehicle are provided to reduce wrinkling.

The holographic display glass includes:
a first glass;
a second glass; and
a holographic film, where the holographic film, the first glass and the second glass are stacked together; the holographic film is located between the first glass and the second glass; a first adhesive layer is provided between the holographic film and the first glass; and a second adhesive layer is provided between the holographic film and the second glass

A thickness of the holographic film is indicated by *t*, a thickness of the first adhesive layer is indicated by *t1*, a thickness of the second adhesive layer is indicated by *t2,* and *t, t1*, and *t2* satisfy an expression: 1/10≤*t*/(*t1+t2*)≤4/5.

In an embodiment, *t, t1*, and *t2* satisfy an expression: 1/5≤*t?*(*t1+t2)*≤8/15.

In an embodiment, the thickness *t1* of the first adhesive layer is not less than 0.38 mm.

In an embodiment, the thickness *t2* of the second adhesive layer is not less than 0.38 mm.

In an embodiment, the thickness *t1* of the first adhesive layer is not less than 0.76 mm.

In an embodiment, the thickness t2 of the second adhesive layer is not less than 0.76 mm.

In an embodiment, a base layer is further provided between the holographic film and at least one of the first adhesive layer and the second adhesive layer. A sum of thicknesses of the holographic film and all the base layer is in a range of 150 µm to 600 µm.

In an embodiment, the base layer is provided between the holographic film and the first adhesive layer. The first adhesive layer has a part covering a surface of the base layer facing the first glass, another part covering an outer periphery of the base layer, and yet another part covering an outer periphery of the holographic film.

The base layer is provided between the holographic film and the second adhesive layer. The second adhesive layer has a part covering a surface of the base layer facing the second glass, another part covering the outer periphery of the base layer, and yet another part covering the outer periphery of the holographic film.

A processing method of a holographic display glass is provided, the holographic display glass being the holographic display glass as described above. The processing method includes:

laminating the first glass, the first adhesive layer, the holographic film, the second adhesive layer, and the second glass at high temperature and high pressure.

In an embodiment, the laminating the first glass, the first adhesive layer, the holographic film, the second adhesive layer, and the second glass at high temperature and high pressure specifically includes:
forming a high temperature and high pressure atmosphere in a high-pressure sealing apparatus, and placing the first glass, the first adhesive layer, the holographic film, the second adhesive layer, and the second glass in the high-pressure sealing apparatus, followed by laminating.

A process of forming the high temperature and high pressure atmosphere includes a temperature and pressure increasing stage. During the temperature and pressure increasing stage, when a temperature is increased to a first temperature, a temperature increasing rate in the high-pressure sealing apparatus is controlled to be not less than 2°C/min.

In an embodiment, during the temperature and pressure increasing stage, when the temperature is increased to the first temperature, the temperature increasing rate in the high-pressure sealing apparatus is controlled to be not less than 3.75°C/min.

In an embodiment, during the temperature and pressure increasing stage, when the temperature is increased to the first temperature, the temperature increasing rate in the high-pressure sealing apparatus is controlled to be not less than 5°C/min.

In an embodiment, the process of forming the high temperature and high pressure atmosphere further includes a temperature and pressure holding stage, after the temperature and pressure increasing stage.

In an embodiment, in the temperature and pressure increasing stage, the temperature is increased to 130°C to 150°C and the pressure is increased to 10.0 bar to 13.0 bar, in the high-pressure sealing apparatus.

In an embodiment, in the temperature and pressure holding stage, in the high-pressure sealing apparatus, the temperature is held at 130°C to 150°C, and the pressure is held at 10.0 bar to 13.0 bar in the temperature and pressure holding stage, with a duration of 30 min to 50 min.

In an embodiment, the first adhesive layer has a pattern, and the second adhesive layer has a pattern.

A vehicle includes the above holographic display glass.

### BRIEF DESCRIPTION OF THE DRAWINGS

In order to more clearly illustrate the technical solutions in the embodiments of the present application or the prior art, a brief description is given below for the drawings referred in the description of the embodiments or the prior art. Obviously, the drawings in the following description are merely some embodiments of the present application. For those of ordinary skill in the art, other drawings can also be obtained based on the disclosed drawings without involving any inventive effort.
FIG. 1 shows the working principle of a holographic display film.
FIG. 2 is a schematic diagram showing a configuration of a holographic display glass according to an embodiment.
FIG. 3 is a schematic diagram showing a configuration of a holographic display glass according to another embodiment.
FIG. 4 is a schematic diagram showing a configuration a holographic display glass according to yet another embodiment.
FIG. 5 is a flowchart of a processing method of a holographic display glass according to an embodiment.

### Illustrations for reference numerals:

10, holographic display glass; 11, first glass; 12, second glass; 13, holographic film; 14, first adhesive layer; 15, second adhesive layer; 16, base layer; 20, projection device; 30, eye box.

### DETAILED DESCRIPTION

The technical solutions in the embodiments of the present application are described below clearly and completely with reference to the drawings in the embodiments of the present application. Obviously, the described embodiments only illustrate some, not all, of the embodiments of the present application. All other embodiments obtained by those of ordinary skill in the art based on the embodiments of the disclosure without involving inventive efforts fall within the protection scope of the disclosure.

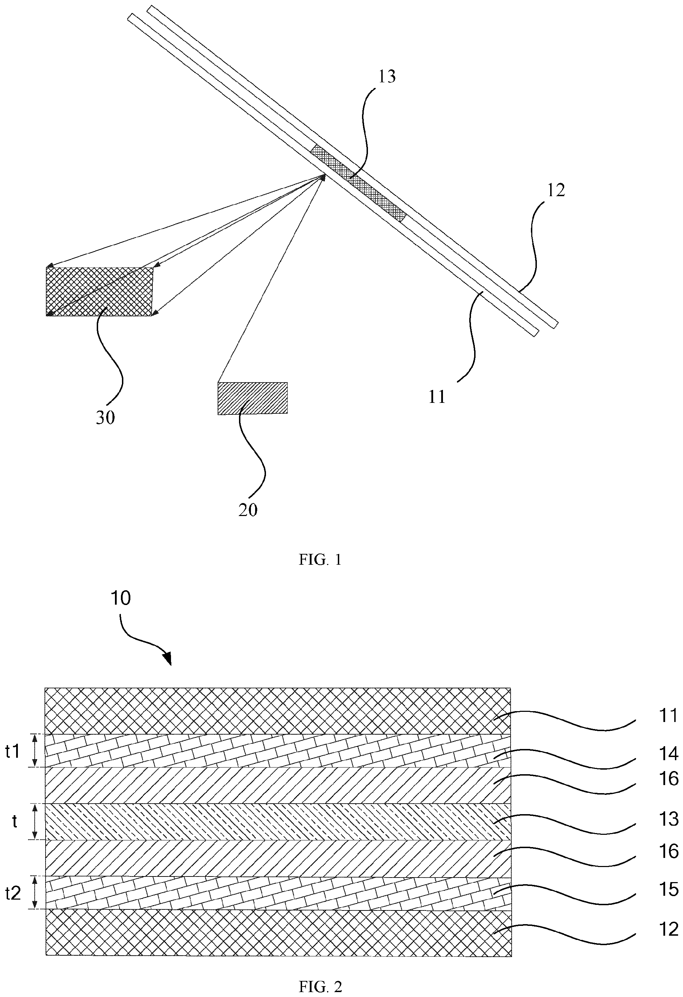

As shown in FIG. 2, in an embodiment, a holographic display glass 10 is provided. The holographic display glass 10 includes a first glass 11, a second glass 12 and a holographic film 13.

The holographic film 13, the first glass 11 and the second glass 12 are stacked together, and the holographic film 13 is located between the first glass 11 and the second glass 12. A first adhesive layer 14 is provided between the holographic film 13 and the first glass 11. A second adhesive layer 15 is provided between the holographic film 13 and the second glass 12.

The thickness of the holographic film 13 is denoted by t, the thickness of the first adhesive layer 14 is denoted by *t1*, and the thickness of the second adhesive layer 15 is denoted by *t2.* The *t, t1*, and *t2* satisfy the following expression: 1/10≤*t*/(*t1+t2*)≤4/5*.*

In the holographic display glass 10 provided by the above technical scheme, a ratio between the thickness t of the holographic film 13 and the sum of the thickness *t1* of the first adhesive layer 14 and the thickness t*2* of the second adhesive layer 15 is optimized and controlled in the range of 1/10 to 4/5. As such, the difference in thermal shrinkage between the holographic film 13 and the two adhesive layers during a laminating process is reduced, thereby reducing the wrinkling of the holographic film 13 in the holographic display glass 10.

Further, in some embodiments, a ratio between the thickness t of the holographic film 13 and the sum of the thickness *t1* of the first adhesive layer 14 and the thickness t2 of the second adhesive layer 15 satisfies 1/5≤*t*/(*t1+t2*)≤8/15.

An interference pattern is formed on the holographic film 13. As shown in FIG. 1, when light emitted by the picture generation unit (PGU) (i.e., a projection device 20) is irradiated onto the holographic film 13, diffraction occurs under the action of the interference pattern in the holographic film 13, and a holographic image is presented. Therefore, if the holographic film 13 is wrinkled, the final imaging effect of the holographic display glass 10 will be affected. The present application intends to reduce the wrinkling of the holographic film 13 and improve the imaging effect.

The first adhesive layer 14 and/or the second adhesive layer 15 may be a layer of optically transparent material, so that the holographic display glass 10 can remain transparent when no image information needs to be displayed. When the holographic display glass 10 is applied to a vehicle, the holographic display glass 10 can be used as a front windshield, which has both an image displaying function and a light transmitting function.

Optionally, the holographic display glass 10 may also be applied to other display devices, which is not specifically limited herein.

In some embodiments, the first adhesive layer 14 and/or the second adhesive layer 15 includes a polyvinyl butyral (PVB) film layer.

Optionally, in other embodiments, the first adhesive layer 14 and/or the second adhesive layer 15 includes an ethylene vinyl acetate film layer.

Further, in an embodiment, the thickness *t1* of the first adhesive layer 14 is not less than 0.38 mm.

Similarly, in another embodiment, the thickness *t2* of the second adhesive layer 15 is not less than 0.38 mm.

In other embodiments, the thickness *t1* of the first adhesive layer 14 is not less than 0.76 mm.

And/or the thickness *t2* of the second adhesive layer 15 is not less than 0.76 mm.

The both sides of the holographic film 13 are provided with adhesive layers respectively, and the thickness of the adhesive layers on both sides is preferably greater than 0.76 mm. In a lamination process, the holographic film 13, the first adhesive layer 14, and the second adhesive layer 15 are all deformed to different degrees. Under the condition that 1/10≤*t*/(*t1+t2*)≤4/5 is satisfied, when the thicknesses of the first adhesive layer 14 and the second adhesive layer 15 are both greater than 0.75 mm, the difference in thermal shrinkage between the holographic film 13 and the adhesive layers on its both sides is further reduced, and the wrinkling condition is further improved.

The holographic display glass 10 may not be limited to have five film layers, and may further include other functional layers. For example, a functional layer may be further plated on the outer surfaces of the first glass 11 and/or the second glass 12, or other functional layers may be further provided between the holographic film 13 and the adhesive layers on its both sides.

As shown in FIG. 2, a base layer 16 is further provided between the holographic film 13 and at least one of the first adhesive layer 14 and the second adhesive layer 15. The sum of the thicknesses of the holographic film 13 and all the base layers 16 is in a range of 150 µm to 600 µm. Therefore, in the processing stage, the difference in thermal shrinkage between the holographic film 13 and the two adhesive layers is further reduced, and the wrinkling condition of the holographic film 13 is further improved.

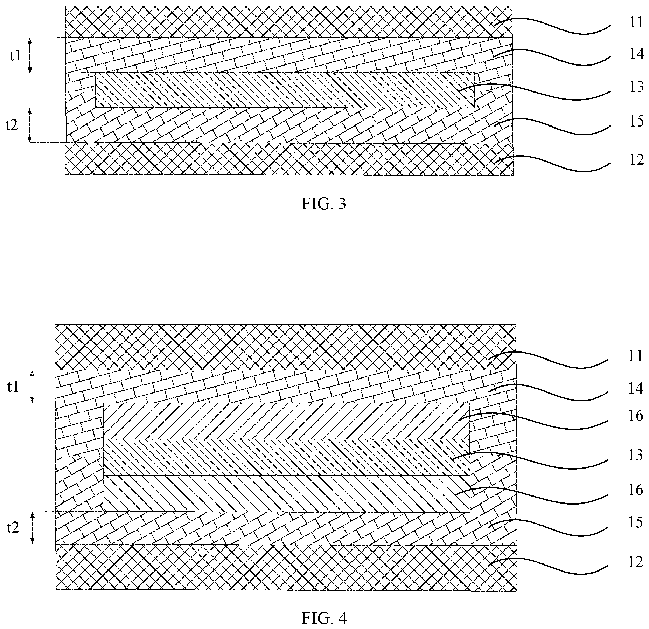

Further, as shown in FIG. 4, a part of the first adhesive layer 14 may cover a surface of the base layer 16 facing the first glass 11, and another part of the first adhesive layer 14 may cover an outer periphery of such base layer 16. Similarly, a part of the second adhesive layer 15 may also cover a surface of the base layer 16 facing the second glass 12 and another part of the second adhesive layer 15 may cover the outer periphery of such base layer 16. Further, the first adhesive layer 14 and/or the second adhesive layer 15 each has yet another part for covering an outer periphery of the holographic film 13.

A surface of the holographic film 13 facing the first glass 11 is a first film surface (not labeled), and a surface of the holographic film 13 facing the second glass 12 is a second film surface (not labeled). A surface of the base layer 16 facing away from the holographic film 13 is a third film surface (not labeled).

In the present application, the thickness t of the holographic film 13 refers to an average thickness of the whole holographic film 13.

As shown in FIG. 4, the holographic display glass 10 includes the holographic film 13, the base layer 16, the first adhesive layer 14, the second adhesive layer 15, the first glass 11, and the second glass 12. The first adhesive layer 14 and/or the second adhesive layer 15 each has a part covering the outer periphery of the base layer 16. The thickness *t1* of the first adhesive layer 14 refers to an average thickness of the part of the first adhesive layer 14 between the first glass 11 and the corresponding third film surface. When calculating this average thickness *t1*, the part of the first adhesive layer 14 that covers the out periphery of the base layer 16 is excluded, and the part of the first adhesive layer 14 that covers the outer periphery of the holographic film 13 is also excluded. The thickness t2 of the second adhesive layer 15 refers to an average thickness of the part of the second adhesive layer 15 between the second glass 12 and the corresponding third film surface. When calculating this average thickness t2, the part of the second adhesive layer 15 that covers the outer periphery of the base layer 16 is excluded, and the other part of the second adhesive layer 15 that covers the outer periphery of the holographic film 13 is also excluded.

As shown in FIG. 3, the holographic display glass 10 includes the holographic film 13, the first adhesive layer 14, the second adhesive layer 15, the first glass 11, and the second glass 12. The first adhesive layer 14 and/or the second adhesive layer 15 each has a part covering the outer periphery of the holographic film 13. The thickness *t1* of the first adhesive layer 14 refers to an average thickness of the part of the first adhesive layer 14 between the first glass 11 and the first film surface. When calculating this average thickness *t1*, the part of the first adhesive layer 14 that covers the outer periphery of the holographic film 13 is excluded. The thickness t2 of the second adhesive layer 15 refers to an average thickness of the part of the second adhesive layer 15 between the second glass 12 and the second film surface. When calculating this average thickness t2, the part of the second adhesive layer 15 that covers the outer periphery of the holographic film 13 is excluded.

During a lamination process at high temperature and high pressure, the first adhesive layer 14 and the second adhesive layer 15 cooperate, so that the first glass 11, the second glass 12 and various film layers included in the holographic display glass 10 are connected as a whole.

In some other embodiments, the first adhesive layer 14 and/or the second adhesive layer 15 has a pattern to smoothly remove intermediate bubbles during the lamination process.

Further, in an embodiment, there is provided a processing method of the holographic display glass 10. The holographic display glass 10 is the holographic display glass 10 as described in any of the above embodiments. The processing method includes the following step.

The first glass 11, the first adhesive layer 14, the holographic film 13, the second adhesive layer 15, and the second glass 12 are laminated at high temperature and high pressure.

The above scheme provides a processing method of the holographic display glass 10, which is mainly used for processing the holographic display glass 10 as described in any of the above embodiments. In the holographic display glass 10, with respect to the sum of the thickness *t1* of the first adhesive layer 14 and the thickness *t2* of the second adhesive layer 15, and the thickness *t* of the holographic film 13, 1/10*t*/(*t1+t2*)≤4/5 is satisfied. Therefore, when being processed at high temperature and high pressure, the difference in thermal shrinkage between the holographic film 13 and the two adhesive layers is improved and the wrinkling of the holographic film 13 is reduced.

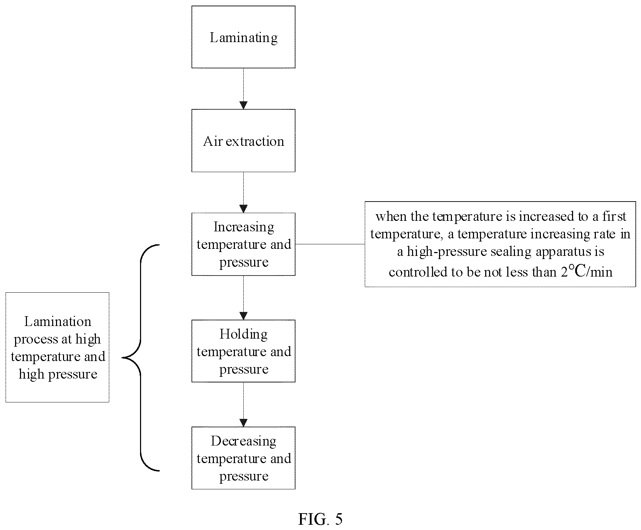

Further, as shown in FIG. 5, before laminating the first glass 11, the first adhesive layer 14, the holographic film 13, the second adhesive layer 15, and the second glass 12, the laminating and air extraction processes may be further included. Specifically, the first glass 11, the first adhesive layer 14, the holographic film 13, the second adhesive layer 15, and the second glass 12 are successively stacked together in this order, and the air between the layers is removed by cold drawing, so as to prepare for a subsequent lamination process at high-temperature and high-pressure.

Certainly, when the holographic display glass 10 further includes the two base layers 16, during the combination process, the various film layers are stacked together successively in the following order: the first glass 11, the first adhesive layer 14, the base layer 16, the holographic film 13, the base layer 16, the second adhesive layer 15 and the second glass 12.

The patterns provided on the first adhesive layer 14 and/or the second adhesive layer 15 allow for more thorough removal of air during the cold drawing process.

Laminating the first glass 11, the first adhesive layer 14, the holographic film 13, the second adhesive layer 15, and the second glass 12 at high temperature and high pressure specifically includes the following step:
forming a high temperature and high pressure atmosphere in a high-pressure sealing apparatus, and placing the first glass 11, the first adhesive layer 14, the holographic film 13, the second adhesive layer 15, and the second glass 12 in the high-pressure sealing apparatus, followed by laminating.

As shown in FIG. 5, a process of forming the high temperature and high pressure atmosphere includes a temperature and pressure increasing stage. After the temperature and pressure increasing stage, a temperature and pressure holding stage and a temperature and pressure decreasing stage are further included.

In the temperature and pressure increasing stage and the temperature and pressure holding stage, no air enters between the film layers included in the holographic display glass 10, and the first glass 11 and the second glass 12 are bonded together under the action of the first adhesive layer 14 and the second adhesive layer 15. Subsequently, during the temperature and pressure decreasing stage, since the first glass 11 and the second glass 12 are bonded together, no air will enter between the first glass 11 and the second glass 12 again.

In order to ensure that the first adhesive layer 14 and the second adhesive layer 15 seal edges as soon as possible in the temperature and pressure increasing stage, the shrinkage time of the first adhesive layer 14 and the second adhesive layer 15 is reduced. The difference in shrinkage between the two adhesive layers and the holographic film 13 is reduced during this stage, thus reducing the wrinkling. As shown in Fig. 5, after the temperature is gradually increased to a first temperature in the temperature and pressure increasing stage, a temperature increasing rate in the high-pressure sealing apparatus is controlled to be not less than 2°C/min.

In an embodiment, after the temperature is increased to the first temperature in the temperature and pressure increasing stage, the temperature increasing rate in the high-pressure sealing apparatus is controlled to be not less than 3.75°C/min.

In an embodiment, after the temperature is increased to the first temperature in the temperature and pressure increasing stage, the temperature increasing rate in the high-pressure sealing apparatus is controlled to be not less than 5°C/min.

In some embodiments, the first temperature is 80°C. When the temperature reaches 80°C or more, a higher temperature increasing rate can accelerate edge sealing speeds of the first adhesive layer 14 and the second adhesive layer 15, thereby reducing the wrinkling of the holographic film 13.

In an embodiment, the process of forming the high temperature and high pressure atmosphere further includes the temperature and pressure holding stage, after the temperature and pressure increasing stage.

In the temperature and pressure increasing stage, the temperature is increased to 130°C to 150°C and the pressure is increased to 10.0 bar to 13.0 bar in the high-pressure sealing apparatus.

In the temperature and pressure holding stage, the temperature in the high-pressure sealing apparatus is held at 130°C to 150°C, and the pressure is held at 10.0 bar to 13.0 bar, with a duration of 30 min to 50 min.

After the temperature and pressure holding stage is finished, the various film layers in the holographic display glass 10 are completely encapsulated between the first glass 11 and the second glass 12, and then the temperature and pressure decreasing stage is performed, and then the holographic display glass 10 can be removed from the high-pressure sealing apparatus.

It should be noted that the temperature changing process and the pressure changing process are not exactly synchronized during the temperature and pressure increasing stage. Specifically, the temperature is increased from normal temperature to 105°C, and meanwhile, the pressure is increased to 3.5 bar to 5 bar. The temperature is then increased to 130°C to 150°C under the pressure of 3.5 bar to 5 bar. When the temperature is at 130°C to 150°C, the pressure is further increased to 10.0 bar to 13.0 bar.

Specifically, the high-pressure sealing apparatus may be an autoclave.

Furthermore, in yet another embodiment, a vehicle is provided. The vehicle includes the holographic display glass 10 as described above.

The above scheme provides a vehicle, which adopts the holographic display glass 10 as described in any of the above embodiments, so that the wrinkling thereof is effectively improved, and the projection display effect of the vehicle is improved.

In some embodiments, the front windshield of the vehicle is the holographic display glass 10.

As shown in FIG. 1, a projection device 20 for transmitting image information is provided in the vehicle. After the light emitted by the projection device 20 hits the holographic film 13, it is reflected to the driver's eyes (an area shown by an eye box 30 in the figure), so that the driver can view information projected by the projection device 20 without turning a head or lowering a head.

In some embodiments, a pixel size of the holographic display glass 10 is in a range of 25 µm to 600 µm.

Further, a haze of the holographic display glass 10 is not greater than 1%. A color ratio of the holographic display glass 10 for each of the three primary colors is not less than 90%.

In the description of the present application, it is to be understood that orientations or positional relationships indicated by the terms "center", "longitudinal", "transverse", "length", "width", "thickness", "upper", "lower", "front", "rear", "left", "right", "vertical", "horizontal", "top", "bottom", "inner", "outer", "clockwise", "counterclockwise", "axial", "radial", "circumferential", etc. are based on the orientations or positional relationships in the drawings. These terms are only intended for facilitating illustrating the present application and simplifying the illustration, rather than indicating or implying that the devices or elements indicated have to present particular orientations, and be constructed and operated in particular orientations, and therefore cannot be construed as limiting the present application.

In addition, the terms "first" and "second" are only intended for illustrative purposes, rather than being construed as indicating or implying relative importance or implicitly designating the quantity of the technical features as indicated. Thus, the features defined by "first" and "second" may explicitly or implicitly include at least one of said features. In the illustrations of the present application, the term "a plurality of" means at least two, for example two or three, unless otherwise explicitly and specifically defined.

In the present application, unless otherwise expressly stated and defined, the first feature, when being referred to as being located "above" or "below" the second feature, may be in direct contact with the second feature, or in indirect contact with the second feature via an intermediate feature. Moreover, the first feature, when being referred to as being disposed "on", "above" and "over" the second feature, may be disposed right above or obliquely above the second feature, or simply disposed higher in level than the second feature. The first feature, when being referred to as being disposed "under", "below" and "beneath" the second feature, may be disposed directly below or obliquely below the second feature, or simply disposed lower in level than the second feature.

It should be noted that, when an element is referred to as being "fixed to" or "disposed on" another element, it may be directly on the other element or an intermediate element may also be present. When an element is referred to as being "connected" to another element, it may be directly connected to the other element or an intermediate element might be present at the same time. The terms "vertical", "horizontal", "up", "down", "left", "right" and similar expressions used herein are only for the purpose of illustration, rather than representing the unique implementations.

The technical features of the embodiments above may be combined arbitrarily. To make the description concise, not all possible combinations of the technical features in the above embodiments are described. However, as long as there are no contradictions in the combinations of these technical features, all of the combinations should be considered to be within the scope of the specification.

The embodiments as above only represent several implementations of the present application, and the description thereof is relatively specific and detailed, but it should not be construed as limiting the scope of the patent. It should be noted that for those skilled in the art, various modifications and improvements may be made without departing from the concept of the present application, and all these modifications and improvements fall in the protection scope of the present application. Therefore, the scope of protection of the patent disclosure shall be subject to the appended claims.

## Claims

1. A holographic display glass, comprising:
a first glass;
a second glass; and
a holographic film,
wherein the holographic film, the first glass and the second glass are stacked together, the holographic film is located between the first glass and the second glass; a first adhesive layer is provided between the holographic film and the first glass; and a second adhesive layer is provided between the holographic film and the second glass; and
wherein a thickness of the holographic film is indicated by t, a thickness of the first adhesive layer is indicated by *t1*, a thickness of the second adhesive layer is indicated by *t2,* and *t, t1*, and t2 satisfy an expression: 1/10≤*t*/(*t1*+*t2*)≤4/5.

2. The holographic display glass according to claim 1, wherein *t, t1*, and t2 satisfy an expression: 1/5≤*t*/(*t1*+*t2*)≤8/15.

3. The holographic display glass according to claim 1, wherein the thickness *t1* of the first adhesive layer is not less than 0.38 mm.

4. The holographic display glass according to claim 1, wherein the thickness t2 of the second adhesive layer is not less than 0.38 mm.

5. The holographic display glass according to claim 1, wherein the thickness *t1* of the first adhesive layer is not less than 0.76 mm.

6. The holographic display glass according to claim 1, wherein the thickness t2 of the second adhesive layer is not less than 0.76 mm.

7. The holographic display glass according to any one of claims 1 to 6, wherein a base layer is further provided between the holographic film and at least one of the first adhesive layer and the second adhesive layer, and a sum of thicknesses of the holographic film and all the base layer is in a range of 150 µm to 600 µm.

8. The holographic display glass according to claim 7, wherein the base layer is provided between the holographic film and the first adhesive layer; the first adhesive layer has a part covering a surface of the base layer facing the first glass, another part covering an outer periphery of the base layer, and yet another part covering an outer periphery of the holographic film; and
the base layer is provided between the holographic film and the second adhesive layer;
the second adhesive layer has a part covering a surface of the base layer facing the second glass, another part covering the outer periphery of the base layer, and yet another part covering the outer periphery of the holographic film.

9. A processing method of a holographic display glass, wherein the holographic display glass is the holographic display glass according to any one of claims 1 to 8, and the processing method comprises:
laminating the first glass, the first adhesive layer, the holographic film, the second adhesive layer, and the second glass at high temperature and high pressure.

10. The processing method according to claim 9, wherein the laminating the first glass, the first adhesive layer, the holographic film, the second adhesive layer, and the second glass at high temperature and high pressure specifically comprises:
forming a high temperature and high pressure atmosphere in a high-pressure sealing apparatus, and placing the first glass, the first adhesive layer, the holographic film, the second adhesive layer, and the second glass in the high-pressure sealing apparatus, followed by laminating;
wherein a process of forming the high temperature and high pressure atmosphere comprises a temperature and pressure increasing stage; and during the temperature and pressure increasing stage, when a temperature is increased to a first temperature, a temperature increasing rate in the high-pressure sealing apparatus is controlled to be not less than 2°C/min.

11. The processing method according to claim 10, wherein during the temperature and pressure increasing stage, when the temperature is increased to the first temperature, the temperature increasing rate in the high-pressure sealing apparatus is controlled to be not less than 3.75°C/min.

12. The processing method according to claim 10, wherein during the temperature and pressure increasing stage, when the temperature is increased to the first temperature, the temperature increasing rate in the high-pressure sealing apparatus is controlled to be not less than 5°C/min.

13. The processing method according to any one of claims 10 to 12, wherein the process of forming the high temperature and high pressure atmosphere further comprises a temperature and pressure holding stage, after the temperature and pressure increasing stage.

14. The processing method according to claim 13, wherein in the temperature and pressure increasing stage, the temperature is increased to 130°C to 150°C and the pressure is increased to 10.0 bar to 13.0 bar, in the high-pressure sealing apparatus.

15. The processing method according to claim 13, wherein in the temperature and pressure holding stage, in the high-pressure sealing apparatus, the temperature is held at 130°C to 150°C, and the pressure is held at 10.0 bar to 13.0 bar, with a duration of 30 min to 50 min.

16. The processing method according to any one of claims 9 to 12, wherein the first adhesive layer has a pattern, and the second adhesive layer has a pattern.

17. A vehicle, comprising the holographic display glass according to any one of claims 1 to 8.
